# EUROPÄISCHE PATENTSCHRIFT

(11) **EP 2 783 783 B1**
(45) Veröffentlichungstag und Bekanntmachung des Hinweises auf die Patenterteilung: **01.12.2021**
(21) Anmeldenummer: 14156895.6
(22) Anmeldetag: 27.02.2014
(51) Int. Cl.: B23K 26/00, B23K 26/40

(54) **Verfahren zur Bearbeitung zumindest einer Litzendrahteinheit**
Method for processing at least one stranded wire unit
Procédé d'usinage d'au moins une unité de fil toronné

(30) Priorität: 27.03.2013 ES 201330449
(43) Veröffentlichungstag der Anmeldung: 01.10.2014
(73) Patentinhaber: BSH Hausgeräte GmbH, 81739 München (DE)
(72) Erfinder: Aranda Vazquez, Sandra, 50018 Zaragoza (ES); Bunuel Magdalena, Miguel Angel, 50017 Zaragoza (ES); Ester Sola, Francisco Javier, 50001 Zaragoza (ES); Hernandez Blasco, Pablo Jesus, 50410 Cuarte de Huerva (Zaragoza) (ES); Moya Albertin, Maria Elena, 50002 Zaragoza (ES); Paz Rubio, Rebeca, 50018 Zaragoza (ES); Planas Layunta, Fernando, 50009 Zaragoza (ES); Urrutia Angos, David, 50009 Zaragoza (ES)

(56) Entgegenhaltungen:
- WO-A1-2008/037579
- JP-A- H05 336 634
- JP-A- 2007 296 556
- None

## Beschreibung

Die Erfindung betrifft ein Verfahren zur Bearbeitung zumindest einer Litzendrahteinheit nach dem Patentanspruch 1.

Die Erfindung geht aus von einem einem Fachmann bekannten Verfahren zur Bearbeitung zumindest einer Litzendrahteinheit gemäß dem Oberbegriff des Patentanspruchs 1 (siehe die JP H05 336634 A).

Des Weiteren ist aus JP 2007296556 A ein Verfahren zur Bearbeitung einer Ummantelung einer Litzendrahteinheit, welche mehrere unbeschichtete Litzendrahtelemente umfasst, bekannt.

Die Aufgabe der Erfindung besteht insbesondere darin, eine Litzendrahteinheit zeitsparend und präzise zu bearbeiten. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

Es wird ein Verfahren zur Bearbeitung zumindest einer Litzendrahteinheit mit zumindest zwei, insbesondere zumindest vier, vorteilhaft zumindest sechs, besonders vorteilhaft zumindest acht, bevorzugt zumindest zwölf und besonders bevorzugt zumindest einer Vielzahl an Litzendrahtelementen, die jeweils zumindest eine Beschichtung aufweisen, die sich über zumindest einen Großteil einer Längserstreckung des Litzendrahtelements erstreckt, wobei zumindest ein Teilbereich der Beschichtung durch eine mittels Laser erzeugte Hitze entfernt wird, vorgeschlagen. Insbesondere weist die Litzendrahteinheit weniger als 2000, insbesondere weniger als 1000, vorteilhaft weniger als 500, besonders vorteilhaft weniger als 300 und bevorzugt weniger als 100 Litzendrahtelemente auf. Insbesondere sind die Litzendrahtelemente der Litzendrahteinheit miteinander verdrillt angeordnet. Insbesondere genügt die Litzendrahteinheit dem Standard IEC 60317-13. Unter einem "Litzendrahtelement" soll insbesondere ein Element mit einer elektrischen Leitfähigkeit von mehr als 1 * 10⁻³ S/m, insbesondere von mehr als 1 * 10° S/m und vorteilhaft von mehr als 1 * 10² S/m verstanden werden. Insbesondere ist das Litzendrahtelement aus Kupfer und/oder Aluminium ausgebildet. Alternativ sind weitere, einem Fachmann als sinnvoll erscheinende Materialien denkbar. Insbesondere ist das Litzendrahtelement als ein längliches Element ausgebildet. Insbesondere weist das Litzendrahtelement zumindest eine Längserstreckung auf, die um mehr als einen Faktor 2, insbesondere um mehr als einen Faktor 5, vorteilhaft um mehr als einen Faktor 10 und bevorzugt um mehr als einen Faktor 20 größer ist als zumindest eine Erstreckung des Litzendrahtelements in einer zumindest im Wesentlichen senkrecht zu der Längserstreckung des Litzendrahtelements ausgerichteten Querschnittsebene. Unter der Wendung, dass eine Gerade und/oder Ebene "zumindest im Wesentlichen senkrecht" zu einer weiteren, von der einen Geraden und/oder Ebene getrennt ausgebildeten Gerade und/oder Ebene ausgerichtet ist, soll insbesondere verstanden werden, dass die Gerade und/oder Ebene mit der weiteren Geraden und/oder Ebene bei einer Projektion auf zumindest eine Projektionsebene, in der zumindest die Gerade und/oder die Ebene angeordnet ist, einen Winkel einschließt, der vorzugsweise um weniger als 15°, vorteilhaft um weniger als 10° und insbesondere um weniger als 5° von einem Winkel von 90° abweicht. Unter einer "Beschichtung" soll eine fest haftende Schicht aus einem Stoff verstanden werden, die auf eine Oberfläche des Litzendrahtelements aufgebracht ist. Insbesondere weist die Beschichtung eine Materialstärke auf, die weniger als 10 %, vorzugsweise weniger als 5 % und insbesondere weniger als 1 % einer Materialstärke des Bauteils, auf dem die Beschichtung aufgebracht ist, beträgt. Insbesondere weist die Beschichtung eine zumindest im Wesentlichen gleich bleibende Materialstärke auf. Insbesondere weist die Beschichtung eine Materialstärke von weniger als 0,1 mm, insbesondere von weniger als 0,03 mm, vorteilhaft von weniger als 0,01 mm und bevorzugt von weniger als 0,003 mm auf. Insbesondere ist die Beschichtung aus Emaille und/oder Harz ausgebildet. Alternativ sind weitere, einem Fachmann als sinnvoll erscheinende Materialien denkbar. Unter der Wendung, dass die Beschichtung eine "zumindest im Wesentlichen gleich bleibende Materialstärke" aufweist, soll insbesondere verstanden werden, dass sich ein Betrag der Materialstärke im Bereich der Beschichtung des Bauteils um weniger als 20 %, insbesondere um weniger als 10 % und vorteilhaft um weniger als 5 % ändert. Unter der Wendung, dass sich die Beschichtung über "zumindest einen Großteil" einer Längserstreckung des Litzendrahtelements erstreckt, soll insbesondere verstanden werden, dass sich die Beschichtung über einen Anteil von mehr als 70 %, insbesondere von mehr als 80 %, vorteilhaft von mehr als 90 % und bevorzugt von mehr als 95 % einer Längserstreckung des Litzendrahtelements erstreckt. Unter einer "Längserstreckung" des Litzendrahtelements soll insbesondere eine lange Seite eines das Litzendrahtelement bei einer Abwicklung des Litzendrahtelements in einer Ebene umschließenden Rechtecks verstanden werden. Unter einem "Laser" soll insbesondere eine Einheit mit zumindest einem Lasermedium verstanden werden, die dazu vorgesehen ist, durch Anregung von Atomen des Lasermediums zumindest einen Laserstrahl zu erzeugen. Unter einem "Laserstrahl" soll insbesondere eine mittels des Lasers erzeugte, kohärente elektromagnetische Strahlung verstanden werden, die zumindest eine Vielzahl an Photonen mit zumindest im Wesentlichen gleicher Energie, insbesondere Wellenlänge, und/oder Phasenlage aufweist. Insbesondere wird von dem Laser mittels des Laserstrahls auf zumindest einer Auftrefffläche des Laserstrahls eine Temperatur größer als 70°C, insbesondere größer als 80°C und vorteilhaft größer als 95°C erzeugt. Insbesondere wird von dem Laser mittels des Laserstrahls auf zumindest einer Auftrefffläche des Laserstrahls eine Temperatur kleiner als 1000°C, insbesondere kleiner als 700°C und vorteilhaft kleiner als 500°C erzeugt. Insbesondere wird von dem Laser ein Laserstrahl mit einer Wellenlänge größer als 300 nm, insbesondere größer als 400 nm und vorteilhaft größer als 500 nm erzeugt. Insbesondere wird von dem Laser ein Laserstrahl mit einer Wellenlänge kleiner als 2000 nm, insbesondere kleiner als 1500 nm und vorteilhaft kleiner als 1200 nm erzeugt. Unter der Wendung, dass zumindest ein Teilbereich der Beschichtung durch eine mittels Laser erzeugte Hitze "entfernt" wird, soll insbesondere verstanden werden, dass der Teilbereich der Beschichtung durch eine mittels Laser erzeugte Hitze gelöst, insbesondere abgelöst, wird. Der Teilbereich der Beschichtung wird durch eine mittels Laser erzeugte Hitze verdampft. Unter "vorgesehen" soll insbesondere speziell ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Durch die erfindungsgemäße Ausgestaltung kann insbesondere eine Litzendrahteinheit zeitsparend und präzise bearbeitet werden. Weiterhin kann vorteilhaft innerhalb einer kurzen Zeit ein präzises Bearbeitungsergebnis erreicht werden. Zudem kann vorteilhaft der Teilbereich flexibel und/oder präzise durch die mittels Laser erzeugte Hitze entfernt werden. Weiterhin kann vorteilhaft durch Entfernen der Beschichtung in dem Teilbereich ein unbeschädigtes und/oder funktionstüchtiges Litzendrahtelement erreicht werden. Zudem können vorteilhaft geringe Produktionskosten erreicht werden.

Die Erfindung sieht vor, dass der Teilbereich der Beschichtung direkt mittels des Lasers erhitzt wird. Unter der Wendung, dass der Teilbereich der Beschichtung "direkt" mittels des Lasers erhitzt wird, soll insbesondere verstanden werden, dass der von dem Laser erzeugte Laserstrahl zumindest auf eine von dem Litzendrahtelement wegweisende Oberfläche der Beschichtung und/oder auf einen Kern der Beschichtung gerichtet wird. Insbesondere wird der Teilbereich der Beschichtung unter Vermeidung eines direkten Kontakts des von dem Laser erzeugten Laserstrahls mit einer Oberfläche zumindest eines Leitungsstrangs, insbesondere eines Kerns, des Litzendrahtelements und/oder mit dem Leitungsstrang und/oder eines Kontaktbereichs zwischen der Beschichtung und der Oberfläche des Leitungsstrangs erhitzt. Insbesondere ist eine Temperatur des von dem Laser erzeugten Laserstrahls kleiner als eine Schmelztemperatur des Litzendrahtelements. Dadurch kann vorteilhaft mittels Laser eine präzise Erhitzung und/oder Entfernung der Beschichtung in dem Teilbereich erreicht werden. Zudem kann vorteilhaft eine Beschädigung des Litzendrahtelements verhindert werden.

Gemäß der Erfindung bildet der Teilbereich einen Endbereich eines jeweiligen der Litzendrahtelemente. Unter einem "Endbereich" des Litzendrahtelements soll insbesondere ein Bereich verstanden werden, der sich bei einer Abwicklung des Litzendrahtelements in zumindest eine Ebene ausgehend von einem ersten Ende des Litzendrahtelements in Richtung eines dem ersten Ende gegenüberliegenden zweiten Ende des Litzendrahtelements über eine Strecke von weniger als 10 %, insbesondere von weniger als 5 % und vorteilhaft von weniger als 1 % der Längserstreckung des Litzendrahtelements erstreckt. Insbesondere erstreckt sich der Endbereich über eine Strecke von weniger als 5 cm, insbesondere von weniger als 4 cm, vorteilhaft von weniger als 3 cm und bevorzugt weniger als 2 cm der Längserstreckung des Litzendrahtelements. Insbesondere erstreckt sich der Endbereich über eine Strecke von mehr als 0,1 cm, insbesondere von mehr als 0,25 cm, vorteilhaft von mehr als 0,5 cm und bevorzugt von mehr als 1 cm der Längserstreckung des Litzendrahtelements. Insbesondere wird die Beschichtung des Litzendrahtelements in dem Endbereich zu einer Kontaktierung des Litzendrahtelements mit zumindest einer weiteren Einheit, insbesondere einer elektrischen Stromquelle, entfernt. Dadurch kann vorteilhaft eine funktionstüchtige Kontaktierung mit geringer Defektrate erreicht werden.

Weiterhin wird vorgeschlagen, dass jedes der Litzendrahtelemente zu einer Entfernung des Teilbereichs der Beschichtung von zumindest zwei Seiten erhitzt wird. Insbesondere werden die Litzendrahtelemente zu einer Entfernung des Teilbereichs der Beschichtung bei einer Aufrechterhaltung einer Richtung des von dem Laser erzeugten Laserstrahls gedreht. Alternativ ist denkbar, dass die Litzendrahtelemente in einer insbesondere fixen Position gehalten und der von dem Laser erzeugte Laserstrahl um die Litzendrahtelemente gedreht wird. Ebenfalls denkbar ist, dass die Litzendrahtelemente zu einer Entfernung des Teilbereichs der Beschichtung von einer ersten Seite mittels eines ersten Lasers und von einer zweiten Seite mittels eines zweiten, von dem ersten Laser getrennt ausgebildeten Lasers bearbeitet werden. Dadurch kann vorteilhaft mittels Laser eine präzise und/oder zumindest im Wesentlichen vollständige Entfernung der Beschichtung in dem Teilbereich erreicht werden.

Erfindungsgemäß werden die Litzendrahtelemente vor einer Bearbeitung nebeneinander angeordnet. Insbesondere werden die verdrillt miteinander angeordneten Litzendrahtelemente vor einer Bearbeitung, insbesondere durch Plattdrücken der Litzendrahteinheit, entdrillt. Unter der Wendung, dass die Litzendrahtelemente vor einer Bearbeitung "nebeneinander" angeordnet werden, soll insbesondere verstanden werden, dass die Litzendrahtelemente zumindest in einem Abschnitt der Litzendrahtelemente, in dem insbesondere der Teilbereich der Beschichtung angeordnet ist, auf zumindest einer Ebene bezüglich der Längserstreckung der Litzendrahtelemente zumindest im Wesentlichen parallel zueinander ausgerichtet sind. Insbesondere existiert zumindest eine Gerade, die in der Ebene verläuft und zumindest im Wesentlichen senkrecht zu einer Längserstreckung eines ersten der Litzendrahtelemente in dem Abschnitt ausgerichtet ist und die einen Großteil, insbesondere alle Litzendrahtelemente zumindest im Wesentlichen senkrecht schneidet. Insbesondere ist ein Abstand zweier direkt benachbarter Litzendrahtelemente kleiner als eine Dicke der Litzendrahtelemente. Insbesondere ist der Abstand zweier direkt benachbarter Litzendrahtelemente kleiner als 50 %, insbesondere kleiner als 20 % und vorteilhaft kleiner als 10 % der Dicke eines der Litzendrahtelemente. Insbesondere ist die Dicke zumindest im Wesentlichen parallel zu der Geraden ausgerichtet. Insbesondere ist der Abstand gemessen zwischen zwei einander zuweisenden Oberflächen zweier direkt benachbarter Litzendrahtelemente. Insbesondere sind die Litzendrahtelemente in Richtung der Geraden in einem direkten Kontakt miteinander angeordnet. Unter der Wendung, dass eine Gerade und/oder Ebene "zumindest im Wesentlichen parallel" zu einer weiteren, von der einen Geraden und/oder Ebene getrennt ausgebildeten Gerade und/oder Ebene ausgerichtet ist, soll insbesondere verstanden werden, dass die Gerade und/oder Ebene mit der weiteren Geraden und/oder Ebene einen Winkel einschließt, der vorzugsweise um weniger als 15°, vorteilhaft um weniger als 10° und insbesondere um weniger als 5° von einem Winkel von 0° abweicht. Dadurch kann vorteilhaft eine automatisierte und/oder maschinelle Bearbeitung der Litzendrahtelemente erreicht werden. Zudem kann vorteilhaft eine geringe Bearbeitungszeit erreicht werden.

Zudem wird vorgeschlagen, dass zumindest ein Teil der Litzendrahtelemente alle gleichzeitig bearbeitet wird. Unter der Wendung, dass zumindest ein Teil der Litzendrahtelemente "gleichzeitig bearbeitet" wird, soll insbesondere verstanden werden, dass vor einem erstmaligen Abschluss, insbesondere einer erstmaligen Beendigung, vorteilhaft einer erstmaligen Fertigstellung, einer Bearbeitung eines der Litzendrahtelemente mit einer Bearbeitung aller weiterer Litzendrahtelemente begonnen wurde. Insbesondere existiert zumindest ein Zustand, in dem sich alle Litzendrahtelemente in Bearbeitung befinden. Dadurch kann vorteilhaft eine Serienfertigung und/oder eine geringe Bearbeitungszeit erreicht werden. Zudem kann vorteilhaft eine hohe Reproduzierbarkeit erreicht werden. Weiterhin wird vorgeschlagen, dass eine Scanrichtung, in der der Laser über den Teilbereich bewegt wird, in einem Winkel von zumindest im Wesentlichen 45° zu Längserstreckungen eines jeden der Litzendrahtelemente ausgerichtet wird. Unter "zumindest im Wesentlichen" soll in diesem Zusammenhang insbesondere verstanden werden, dass eine Abweichung von einem vorgegebenen Wert insbesondere weniger als 25 %, vorzugsweise weniger als 10 % und besonders bevorzugt weniger als 5 % des vorgegebenen Werts beträgt. Alternativ ist denkbar, dass die Scanrichtung zumindest im Wesentlichen parallel zu Längserstreckungen eines jeden der Litzendrahtelemente ausgerichtet wird. Ebenfalls denkbar ist, dass die Scanrichtung zumindest im Wesentlichen senkrecht zu Längserstreckungen eines jeden der Litzendrahtelemente ausgerichtet wird. Alternativ sind weitere, einem Fachmann als sinnvoll erscheinende Ausrichtungen der Scanrichtung denkbar. Dadurch kann vorteilhaft eine geringe Bearbeitungszeit erreicht werden.

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination.

Es zeigen:
- Fig. 1: ein Hausgerät mit vier Induktionsheizeinheiten in einer schematischen Draufsicht,

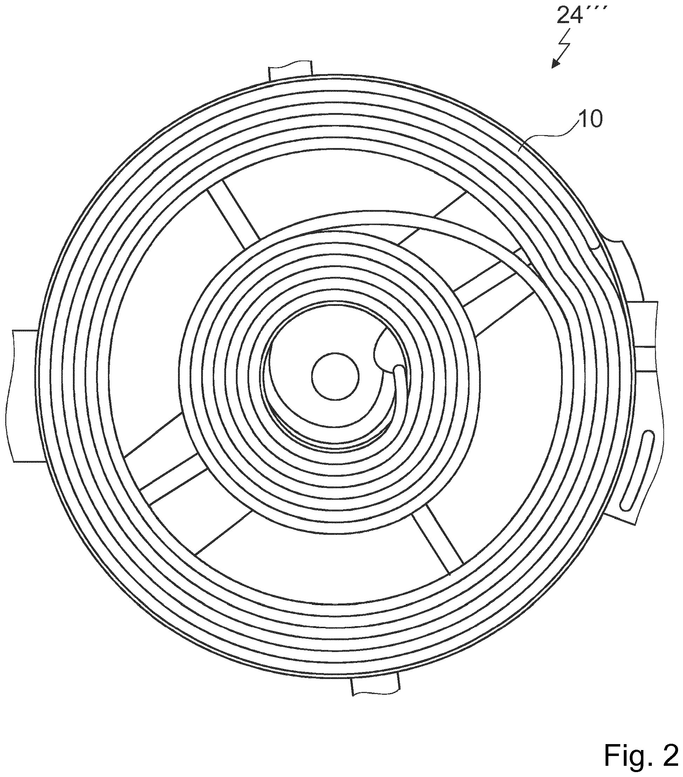

- Fig. 2: eine der Induktionsheizeinheiten aus Fig. 1 mit einer Litzendrahteinheit in einer schematischen Draufsicht,
- Fig. 3: die Litzendrahteinheit aus Fig. 2 in einem ersten Zustand vor einer Bearbeitung in einer schematischen Frontdarstellung,
- Fig. 4: die Litzendrahteinheit aus Fig. 3 in einem weiteren Zustand vor einer Bearbeitung in einer schematischen Frontdarstellung,
- Fig. 5: die Litzendrahteinheit aus Fig. 4 in dem weiteren Zustand vor einer Bearbeitung in einer schematischen Draufsicht und
- Fig. 6: die Litzendrahteinheit aus Fig. 4 in dem weiteren Zustand bei Bearbeitung in einer schematischen Schnittdarstellung.

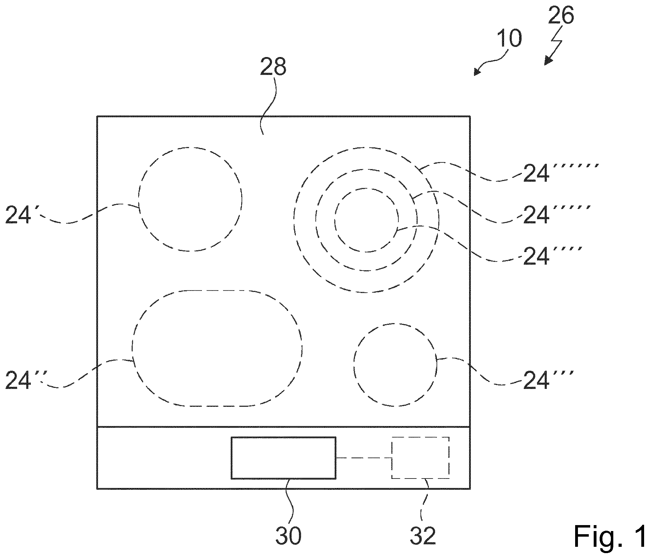

Fig. 1 zeigt ein Hausgerät 26, das als ein Induktionskochfeld ausgebildet ist. Alternativ zu einer Ausbildung als Induktionskochfeld könnte das Hausgerät 26 als Backofen, Mikrowellengerät und/oder Grill ausgebildet sein. Ebenfalls denkbar sind weitere, einem Fachmann als sinnvoll erscheinende Hausgeräte. Das Hausgerät 26 weist eine Platteneinheit 28 zu einem Aufstellen von Gargeschirren auf. Die Platteneinheit 28 ist als eine Kochfeldplatte ausgebildet. Das Hausgerät 26 weist vier Induktionsheizeinheiten 24 auf, die unterhalb der Platteneinheit 28 angeordnet sind. Die Induktionsheizeinheiten 24 sind jeweils dazu vorgesehen, ein auf der Platteneinheit 28 oberhalb einer der Induktionsheizeinheiten 24 aufgestelltes Gargeschirr zu erhitzen. Das Hausgerät 26 weist in einem in eingebautem Zustand einem Bediener zuweisenden Bereich eine Bedieneinheit 30 zu einer Eingabe von Betriebsparametern auf. Beispielsweise sind die Betriebsparameter als Auswahl und/oder Veränderung einer Heizzone und/oder als eine Einstellung einer Heizleistung und/oder Heizleistungsdichte einer Heizzone ausgebildet. Weiterhin weist das Hausgerät 26 eine Steuereinheit 32 auf, die dazu vorgesehen ist, in Abhängigkeit der mittels der Bedieneinheit 30 eingegebenen Betriebsparameter Aktionen auszuführen und/oder Einstellungen zu verändern.

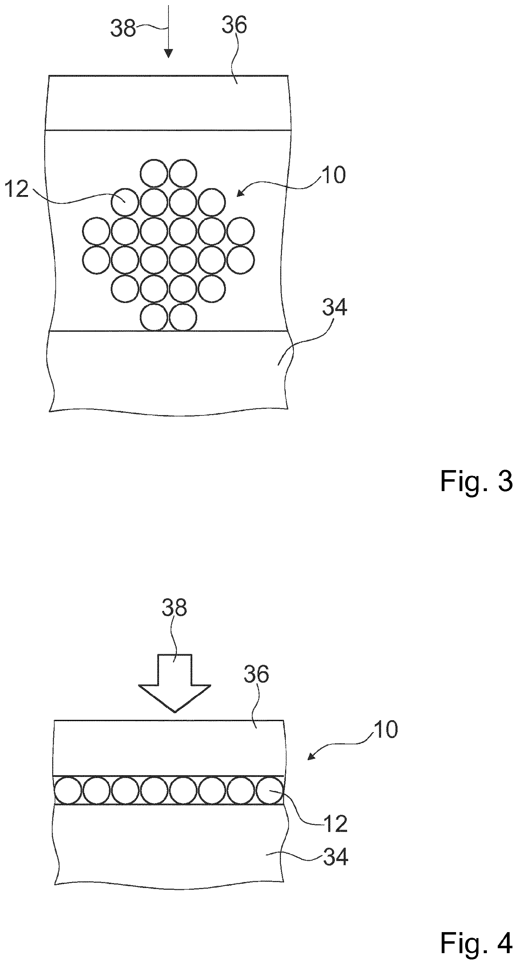

Jede der Induktionsheizeinheiten 24 weist eine Litzendrahteinheit 10 auf, die in einem erfindungsgemäßen Verfahren bearbeitet ist. Fig. 3 zeigt beispielhaft die dritte Induktionsheizeinheit 24'" in einer schematischen Draufsicht. Die Litzendrahteinheit 10 umfasst eine Vielzahl an Litzendrahtelementen 12, die verflochten und verdrillt miteinander angeordnet sind. Die Litzendrahteinheit 10 ist dazu vorgesehen, in Abhängigkeit eines durch die Litzendrahtelemente 12 fließenden elektrischen Stroms ein magnetisches Wechselfeld zu einer Erhitzung eines auf der Induktionsheizeinheit 24 aufgestellten Gargeschirrs zu erzeugen. Zu einer Einspeisung des elektrischen Stroms in die Litzendrahtelemente 12 der Litzendrahteinheit 10 ist die Litzendrahteinheit 10 an eine elektrische Stromquelle angeschlossen (nicht dargestellt). Um eine Kontaktierung der Litzendrahteinheit 10 und der elektrischen Stromquelle zu ermöglichen, ist die Litzendrahteinheit 10 in einem erfindungsgemäßen Verfahren zur Bearbeitung einer Litzendrahteinheit 10 bearbeitet.

Jedes der Litzendrahtelemente 12 weist eine Beschichtung 14 auf, die sich über einen Großteil einer Längserstreckung des Litzendrahtelements 12 erstreckt (vgl. Fig. 3 bis Fig. 6). Die Litzendrahtelemente 12 sind aus Kupfer ausgebildet. Die Beschichtung 14 ist aus einem Polymer-Harz ausgebildet. Um eine Kontaktierung der Litzendrahteinheit 10 und der elektrischen Stromquelle zu ermöglichen, wird bei jedem der Litzendrahtelemente 12 ein Teilbereich 16 der Beschichtung 14 durch eine mittels Laser erzeugte Hitze entfernt. Hierbei bildet der mittels Laser entfernte Teilbereich 16 einen Endbereich 20 jedes Litzendrahtelements 12 aus.

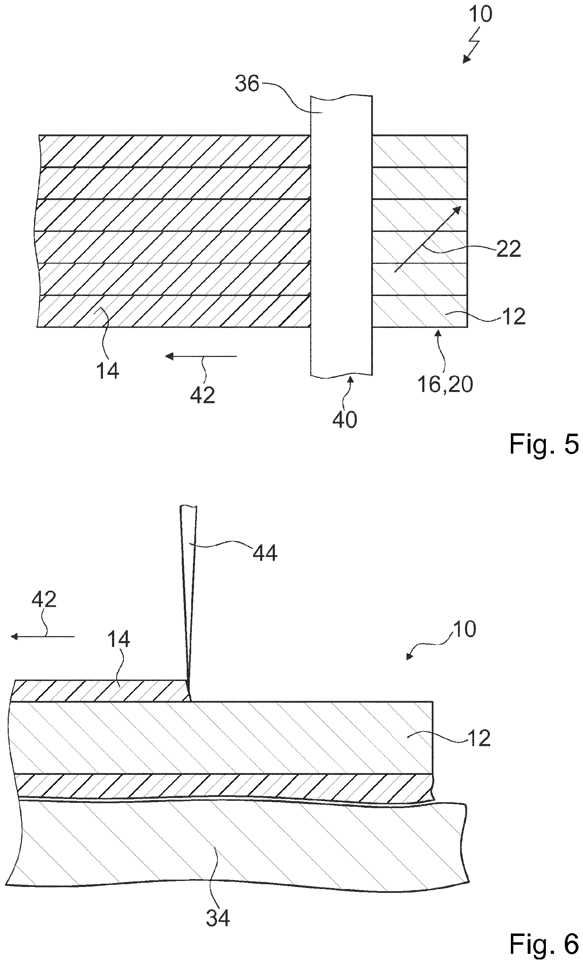

Zunächst werden die verdrillt miteinander angeordneten Litzendrahtelemente 12 mit ihrem Endbereich 20 auf ein Substrat 34 gelegt (vgl. Fig. 3). Vor einer Bearbeitung werden die Litzendrahtelemente 12 nebeneinander angeordnet. Hierzu werden die Litzendrahtelemente 12 zunächst entdrillt. Auf einer dem Substrat 34 entgegengesetzten Seite wird ein Pressblock 36 in einer auf das Substrat 34 zuweisenden Pressrichtung 38 auf die Litzendrahtelemente 12 zu bewegt. Der Pressblock 36 weist eine im Wesentlichen quaderförmige Gestalt auf. Eine Bewegung des Pressblocks 36 in der Pressrichtung 38 wird gestoppt, wenn die Litzendrahtelemente 12 in dem Endbereich 20 bezüglich der Längserstreckung der Litzendrahtelemente 12 im Wesentlichen parallel angeordnet sind. Hierbei wird der Pressblock 36 auf einen Pressbereich 40 der Litzendrahtelemente 12 gepresst. Der Pressbereich 40 ist in einer im Wesentlichen parallel zu der Längserstreckung der Litzendrahtelemente 12 ausgerichteten Längsrichtung 42 dem Endbereich 20 benachbart angeordnet. Somit werden die Litzendrahtelemente 12 durch Plattdrücken der Litzendrahteinheit 10 entdrillt. Vor Beginn einer Bearbeitung der Litzendrahteinheit 10 liegen die Litzendrahtelemente 12 nebeneinander auf dem Substrat 34 auf, wobei der den Endbereich 20 bildende Teilbereich 16 unbedeckt ist (vgl. Fig. 5).

Ein Teil der nebeneinander angeordneten Litzendrahtelemente 12 wird gleichzeitig bearbeitet. Zu einer Bearbeitung wird von dem Laser ein Laserstrahl 44 erzeugt. Der Laserstrahl 44 wird direkt auf den Teilbereich 16 der Beschichtung 14 der Litzendrahtelemente 12 gerichtet. Der Teilbereich 16 der Beschichtung 14 wird direkt mittels Laser erhitzt. Eine von dem Laserstrahl 44 erzeugte Temperatur ist kleiner als eine Schmelztemperatur der Litzendrahtelemente 12. Zudem wird ein Kontakt des Laserstrahls 44 mit den Litzendrahtelementen 12 vermieden. Aufgrund der Temperatur, die kleiner als die Schmelztemperatur der Litzendrahtelemente 12 ist, und aufgrund der Vermeidung des Kontakts des Laserstrahls 44 mit den Litzendrahtelementen 12 verbleiben die Litzendrahtelemente 12 im Wesentlichen von dem Laserstrahl 44 unbeeinflusst. Somit sind die Litzendrahtelemente 12 nach einer Bearbeitung der Litzendrahteinheit 10 in demselben Zustand wie vor der Bearbeitung.

Bei einer Bearbeitung wird der Laserstrahl 44 in einer Scanrichtung 22 über die nebeneinander angeordneten Litzendrahtelemente 12 bewegt. Die Scanrichtung 22, in der der Laser über den Teilbereich 16 bewegt wird, wird in einem Winkel von im Wesentlichen 45° zu Längserstreckungen eines jeden der Litzendrahtelemente 12 ausgerichtet. Alternativ sind weitere, einem Fachmann als sinnvoll erscheinende Scanrichtungen und/oder Winkel denkbar. Zunächst wird der Laserstrahl 44 von einem Ende des Teilbereichs 16 in der Scanrichtung 22 an ein bezüglich der Längsrichtung 42 entgegengesetzt angeordnetes Ende des Teilbereichs 16 bewegt. Anschließend wird der Laserstrahl 44 in einer im Wesentlichen senkrecht zu der Längsrichtung 42 ausgerichteten Querrichtung versetzt und erneut in der Scanrichtung 22 über den Teilbereich 16 bewegt. Dieses Verfahren wird so lange ausgeführt, bis bei allen Litzendrahtelementen 12 der Teilbereich 16 der Beschichtung 14 entfernt ist. Anschließend werden die nebeneinander angeordneten Litzendrahtelemente 12 gemeinsam gedreht und von einer weiteren Seite mittels Laser bearbeitet. Die Litzendrahtelemente 12 werden um einen Winkel von im Wesentlichen 180° um eine im Wesentlichen parallel zu der Längsrichtung 42 ausgerichteten Drehachse gedreht. In dieser gedrehten Stellung wird der Laserstrahl 44 in der Scanrichtung 22 über den Teilbereich 16 der Beschichtung 14 bewegt. Anschließend wird der Laserstrahl 44 in einer im Wesentlichen senkrecht zu der Längsrichtung 42 ausgerichteten Querrichtung versetzt und erneut in der Scanrichtung 22 über den Teilbereich 16 bewegt. Zu einer Entfernung des Teilbereichs 16 der Beschichtung 14 wird jedes der Litzendrahtelemente 12 von zwei Seiten erhitzt.

Ein jeweiliger sich zwischen zwei benachbart angeordneten Litzendrahtelementen 12 befindlicher Bereich der Beschichtung 14 wird durch eine mittels Laser erzeugte Hitze entfernt. Der Bereich der Beschichtung 14, der sich zwischen zwei benachbart angeordneten Litzendrahtelementen 12 befindet, wird durch die von dem Laserstrahl 44 erzeugte Temperatur entfernt. Hierbei verdampfen die sich zwischen zwei benachbart angeordneten Litzendrahtelementen 12 befindlichen Bereiche der Beschichtung 14 aufgrund einer Bearbeitung von einer der Seiten der Litzendrahtelemente 12. Somit werden die Bereiche der Beschichtung 14 zeitgleich mit einer Entfernung des Teilbereichs 16 der Beschichtung 14 entfernt. In dem Endbereich 20 der Litzendrahtelemente 12 wird die gesamte Beschichtung 14 entfernt, um eine gute Kontaktierung zwischen der Litzendrahteinheit 10 und der elektrischen Stromquelle zu erreichen.

### Bezugszeichen

- 10: Litzendrahteinheit
- 12: Litzendrahtelement
- 14: Beschichtung
- 16: Teilbereich
- 20: Endbereich
- 22: Scanrichtung
- 24: Induktionsheizeinheit
- 26: Hausgerät
- 28: Platteneinheit
- 30: Bedieneinheit
- 32: Steuereinheit
- 34: Substrat
- 36: Pressblock
- 38: Pressrichtung
- 40: Pressbereich
- 42: Längsrichtung
- 44: Laserstrahl

## Patentansprüche

1. Verfahren zur Bearbeitung zumindest einer Litzendrahteinheit (10) mit mindestens zwei miteinander verdrillten Litzendrahtelementen (12), die jeweils zumindest eine Beschichtung (14) aufweisen, die eine festhaftende Schicht aus einem Stoff ist, die auf eine Oberfläche des Litzendrahtelements (12) aufgebracht ist, und die sich über zumindest einen Großteil einer Längserstreckung des Litzendrahtelements (12) erstreckt, wobei die Litzendrahtelemente (12) vor einer Bearbeitung nebeneinander angeordnet werden,
**dadurch gekennzeichnet, dass** zumindest ein Teilbereich (16) der Beschichtung (14) durch eine mittels Laser erzeugte Hitze entfernt und verdampft wird, wobei der Teilbereich (16) der Beschichtung (14) direkt mittels des Lasers erhitzt wird, wobei der Teilbereich (16) einen Endbereich (20) eines jeweiligen der Litzendrahtelemente (12) bildet.

2. Verfahren nach einem der vorhergehenden Ansprüche, **dadurch gekennzeichnet, dass** jedes der Litzendrahtelemente (12) zu einer Entfernung des Teilbereichs (16) der Beschichtung (14) von zumindest zwei Seiten erhitzt wird.

3. Verfahren nach einem der vorhergehenden Ansprüche, **dadurch gekennzeichnet, dass** zumindest ein Teil der Litzendrahtelemente (12) gleichzeitig bearbeitet wird.

4. Verfahren nach einem der vorhergehenden Ansprüche, **dadurch gekennzeichnet, dass** eine Scanrichtung (22), in der der Laser über den Teilbereich (16) bewegt wird, in einem Winkel von zumindest im Wesentlichen 45° zu Längserstreckungen eines jeden der Litzendrahtelemente (12) ausgerichtet wird.

## Claims

1. Method for processing at least one stranded wire unit (10) with at least two stranded wire elements (12) twisted around one another, which each have at least one coating (14) that is a bonded layer of a substance which is applied to a surface of the stranded wire element (12), and which extends over at least a majority of a longitudinal extension of the stranded wire element (12), wherein the stranded wire elements (12) are arranged adjacent to one another before processing,
**characterised in that** at least one subregion (16) of the coating (14) is removed and evaporated by laser-generated heat, wherein the subregion (16) of the coating (14) is heated directly by means of the laser, wherein the subregion (16) forms an end region (20) of a respective one of the stranded wire elements (12).

2. Method according to one of the preceding claims, **characterised in that** each of the stranded wire elements (12) is heated in order to remove the subregion (16) of the coating (14) from at least two sides.

3. Method according to one of the preceding claims, **characterised in that** at least some of the stranded wire elements (12) are processed simultaneously.

4. Method according to one of the preceding claims, **characterised in that** a scan direction (22), in which the laser is moved over the subregion (16), is oriented at an angle of at least substantially 45° in relation to longitudinal extensions of each one of the stranded wire elements (12).

## Revendications

1. Procédé d'usinage d'au moins une unité de fil toronné (10) comprenant au moins deux éléments de fil toronné (12) toronnés ensemble, lesquels présentent chacun au moins un revêtement (14), lequel est une couche adhérente d'une matière appliquée à la surface de l'élément de fil toronné (12) et qui s'étend sur au moins une grande partie de l'extension longitudinale de l'élément de fil toronné (12), les éléments de fil toronné (12) étant avant un usinage, agencés l'un à côté de l'autre,
**caractérisé en ce qu'**au moins une partie de zone (16) du revêtement (14) est éliminée et évaporée par de la chaleur produite par un laser, la partie de zone (16) du revêtement (14) étant chauffée directement par le laser, la partie de zone (16) formant la zone d'extrémité (201) de l'un de chaque élément respectif des éléments de fil toronné (12).

2. Procédé selon l'une des revendications précédentes, **caractérisé en ce que** chacun des éléments de fil toronné (12) est chauffé pour l'élimination de la partie de zone (16) du revêtement (14) d'au moins deux côtés.

3. Procédé selon l'une des revendications précédentes, **caractérisé en ce qu'**au moins une partie des éléments de fil toronné (12) est simultanément usinée.

4. Procédé selon l'une des revendications précédentes, **caractérisé en ce que** le sens de balayage (22), dans lequel le laser se déplace sur la partie de zone (16), est orienté à un angle d'au moins essentiellement 45° par rapport aux extensions longitudinales de chacun des éléments de fil toronné (12).
